# EUROPÄISCHE PATENTSCHRIFT

(11) **EP 2 059 366 B1**
(45) Veröffentlichungstag und Bekanntmachung des Hinweises auf die Patenterteilung: **11.04.2012**
(21) Anmeldenummer: 07788002.9
(22) Anmeldetag: 27.07.2007
(51) Int. Cl.: B23K 26/24, B23K 26/28, B23K 33/00, F02M 51/06, F02M 61/16

(54) **VERFAHREN ZUM SCHWEISSEN VON BAUTEILEN MIT GESCHLOSSENEM HOHLQUERSCHNITT MIT EINEM ZWISCHEN DEN BEIDEN ÜBERLAPPENDEN BAUTEILEN ERZEUGTEN UMLAUFENDEN SPALT**
METHOD FOR WELDING COMPONENTS WITH A CLOSED HOLLOW CROSS-SECTION IN SUCH A WAY THAT A PERIPHERAL GAP IS PRODUCED BETWEEN THE TWO OVERLAPPING COMPONENTS
PROCÉDÉ POUR SOUDER DES COMPOSANTS À SECTION TRANSVERSALE CREUSE FERMÉE DE MANIÈRE QU'UN INTERSTICE CIRCONFÉRENTIEL SOIT MÉNAGÉ ENTRE LES DEUX COMPOSANTS CHEVAUCHANTS

(30) Priorität: 30.08.2006 DE 102006040650
(43) Veröffentlichungstag der Anmeldung: 20.05.2009
(73) Patentinhaber: Robert Bosch GmbH, 70442 Stuttgart (DE)
(72) Erfinder: HUEMMER, Ferdinand, 96199 Zapfendorf (DE); VOGEL, Christof, 96120 Bischberg (DE)
(86) Internationale Anmeldenummer: PCT/EP2007/057788
(87) Internationale Veröffentlichungsnummer: WO 2008/025623

(56) Entgegenhaltungen:
- WO-A-2006/138665
- WO-A-2006/138712
- DE-C- 511 461
- JP-A- 9 096 264
- US-A- 5 626 776
- US-A1- 2001 015 013

## Beschreibung

Die vorliegende Erfindung betrifft ein Verfahren zum Fügen von Bauteilen mit einem geschlossenen Hohlquerschnitt sowie ein Gehäuse für ein Einspritzventil gemäß dem Oberbegriff des Ansprüch 1 und 10 (siche, z.B., US 2001/0015013 A1).

Es ist bekannt, zwei Bauteile mit einem Hohlquerschnitt mittels Schweißen zu fügen. Hierbei ist der Fügebereich zwischen den beiden Bauteilen derart ausgelegt, dass ein Innenmaß eines ersten Bauteils mit einem Außenmaß eines zweiten Bauteils eine Presspassung eingeht. Somit ist im Fügebereich zwischen den beiden Bauteilen kein Spalt vorgesehen. Es wurde nun festgestellt, dass, wenn die beiden Bauteile keine saubere Oberfläche aufweisen, Probleme an der Schweißnaht entstehen. Die Bauteile können beispielsweise Rückstände von Gleitmitteln, z.B. Öl oder Benzin, auf der Bauteiloberfläche aufweisen. Diese Rückstände befinden sich somit im Fügebereich zwischen dem ersten und zweiten Bauteil. Beim Schweißen gasen nun diese Rückstände aus und entweichen mangels anderer Möglichkeit durch das Schweißbad. Hierbei entstehen Poren in der Schweißnaht, welche insbesondere eine schlauchartige Form einnehmen können, welche bis zur äußeren Oberfläche der Schweißnaht reichen kann. Dadurch kann eine Undichtigkeit in der Schweißnaht auftreten, welche unerwünscht ist. Daher müssen vor dem Schweißvorgang die Oberflächen der zu schweißenden Bauteile gereinigt werden und frei von Rückständen sein.

Aus der US 2001/0015013 A1 ist bereits eine Vorrichtung bekannt, bei der zwei Bauteile mittels einer Schweißnaht fest miteinander verbunden sind. Dabei handelt es sich um einen Kompressor, der mit einer Taumelscheibe arbeitet und der u.a. einen in einer Zylinderbohrung bewegbaren Kolben umfasst. Der Kolben ist derart aufgebaut, dass zwei Bauteile mittels einer Schweißnaht fest miteinander verbunden sind. Die beiden Bauteile stellen jeweils einen Hohlkörper mit geschlossenem Hohlquerschnitt dar, wobei das zweite Bauteil eine Abschlusskappe bildet und deshalb eine das Bauteil verschließende Bodenplatte aufweist. Zumindest im Bereich der sich überlappenden Hohlquerschnitte entsprechen sich die Formen der Hohlquerschnitte des ersten und zweiten Bauteils. Im Überlappungsbereich der beiden Bauteile weisen das erste Bauteil ein erstes Innenmaß und das zweite Bauteils ein Außenmaß auf, bei denen das Außenmaß des zweiten Bauteils kleiner ist als das Innenmaß des ersten Bauteils. Zum Verschweißen werden die beiden Bauteile so angeordnet, dass das zweite Bauteil so in das erste Bauteil eingeschoben wird, so dass zwischen einer Innenwand des ersten Bauteils und einer Außenwand des zweiten Bauteils, allerdings ausschließlich beschränkt auf den kleinen Überlappungsbereich mit der Länge der Kappenkragens, ein umlaufender Spalt gebildet ist. Die Schweißverbindung wird genau im Stoßbereich der beiden Bauteile vorgenommen, in dem die beiden Stirnseiten der beiden Bauteile abseits des Spaltes aneinander anschlagen.

### Vorteile der Erfindung

Das erfindungsgemäße Verfahren zum Fügen von zwei Bauteilen mit einem Hohlquerschnitt mit den Merkmalen des Patentanspruchs 1 weist demgegenüber den Vorteil auf, dass Undichtigkeiten an der Schweißnaht nicht auftreten können. Beim erfindungsgemäßen Verfahren kann ferner auf einen Reinigungsschritt der zu fügenden Oberflächen vor dem

Schweißen verzichtet werden. Dies wird erfindungsgemäß dadurch erreicht, dass ein erstes zu fügendes Bauteil mit einem geschlossenen Hohlquerschnitt ein Innenmaß aufweist, welches derart größer als ein Außenmaß eines zweiten zu fügenden Bauteils mit geschlossenem Hohlquersechnitt ist, dass zwischen dem Innenmaß des ersten Bauteils und dem Außenmaß des zweiten Bauteils ein umlaufender Spalt vorhanden ist. Dieser Spalt ermöglicht es, dass beim Beginn des Schweißvorgangs eventuell auf den Oberflächen der zu fügenden Bauteile vorhandene Rückstände ausgasen können, so dass diese im weiteren Verlauf des Schwcißverfahrens nicht zu Problemen führen können. Das Ausgasen erfolgt dabei durch die Wärmeentwicklung während des Schweißens und ist abgeschossen, bevor der Schweißstrahl auf eventuell an den Wandflächen der Bauteile haftende Rückstände trifft. Während des Schweißvorgangs schließt sich der Spalt aufgrund der Aufheizung und Erweichung der Fügebereiche der Bauteile, so dass eine fehlerfreie Schweißung möglich ist.

Die Unteransprüche zeigen bevorzugte Weiterbildungen der Erfindung.

Vorzugsweise weist der umlaufende Spalt entlang seiner Umfangsrichtung und entlang seiner Länge in Richtung einer Mittelachse der Bauteile jeweils eins gleich bleibenden Dicke auf. all Dadurch kann ein kontinuierlicher und sichere Schweißvorgang sichergestellt werden.

Gemäß einer anderen bevorzugten Ausgestaltung der Erfindung ist der Spalt sich verjüngend, insbesondere konisch, ausgebildet. Der sich verjüngende Spalt ist dabei regelmäßig mit gleicher Geometrie entlang seines Umfanges ausgebildet.

Vorzugsweise ist das Schweißen ein Laserschweißen.

Das erste und das zweite zu fügende Bauteil weisen besonders bevorzugt jeweils einen kreisförmigen Querschnitt auf. Die Bauteile können beispielsweise mittels Tiefziehen oder Rollen und Verbinden an einer Stoßstelle hergestellt sein.

Der Spalt weist vorzugsweise eine Dicke von ca. 1/100 bis ca. 50/100, bevorzugt ca. 1/10 der Wandstärke des äußeren, zu fügenden Bauteils auf.

Besonders bevorzugt wird das Schweißen derart ausgeführt, dass gleichzeitig an mehreren Positionen mittels mehrerer Schweißeinrichtungen der Schweißvorgang durchgeführt wird. Dadurch kann die Bearbeitungszeit reduziert werden.

Um eine sichere Fixierung des ersten und zweiten Bauteils während des Schweißvorganges bereitzustellen, ist zwischen dem ersten und dem zweiten Bauteil ein Pressverbindungsbereich benachbart zum Spaltbereich angeordnet. Somit können die beiden zu fügenden Bauteile ineinander gesteckt werden und werden durch den Pressverbindungsbereich in vorbestimmten Relativpositionen zueinander gehalten. In einem nächsten Schritt kann dann der Schweißvorgang beginnen.

Weiter bevorzugt sind das erste und zweite Bauteil aus einem dünnen Blechmaterial hergestellt. Die beiden Bauteile weisen vorzugsweise eine gleiche Blechstärke auf.

Ferner betrifft die vorliegende Erfindung ein Gehäuse gemäß Anspruch 10. Ein erfindungsgemäßes Gehäuse für ein Einspritzventil umfasst ein erstes Gehäusebauteil und ein zweites Gehäusebauteil, welche jeweils einen geschlossenen Hohlquerschnitt aufweisen. Die beiden Gehäusebauteile sind an einem Fügebereich mittel Schweißen miteinander genügt. Am Fügebereich ist dabei ein Innenmaß des ersten Gehäusebauteils derart größer als ein Außenmaß des zweiten Gehäusebauteils, dass vor dem Schweißen zwischen dem ersten und zweiten Gehäusebauteil ein Spalt vorhanden ist. Dadurch können Rückstände, welche auf den Oberflächen im Fügebereich der Gehäuschauteile sein können, durch die während des Schweißens erzeugte Wärme durch den Spalt entgasen, und somit nicht zu Problemen in der Schweißnaht, z.B. durch Bildung von Poren o.Ä., führen. Während des Schweißens wird der Spalt geschlossen, so dass zwischen dem ersten und zweiten Gehäusebauteil die Schweißnaht liegt.

Das Gehäuse umfasst weiter bevorzugt einen Pressverbindungsbereich, an welchem das erste und zweite Gehäusebauteil mittels einer Pressverbindung zusätzlich verbunden sind. Der Pressverbindungsbereich ist vorzugsweise benachbart zum Fügebereich angeordnet.

Der Spalt zwischen dem ersten und zweiten Gehäusebauteil vor dem Schweißen ist vorzugsweise mit einer gleich bleibenden Dicke in Längsrichtung der Gehäusebauteile oder sich verjüngend, insbesondere konisch, gebildet.

Ein Hohlquerschnitt des ersten und zweiten Gehäusebauteils ist vorzugsweise jeweils kreisförmig. Mit anderen Worten sind die Gehäusebauteile vorzugsweise zylinderartig ausgebildet. Alternativ können die Gehäusebauteile auch einen ovalen Hohlquerschnitt aufweisen.

Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Schnittansicht eines Gehäuses für ein Einspritzventil vor einem Schweißschritt gemäß einem ersten Ausführungsbeispiel der Erfindung,
- Figur 2: eine schematische Schnittansicht des in Figur 1 gezeigten Gehäuses nach dem Schweißvorgang.
- Figur 3: eine schematische Schnittansicht eines Gehäuses für ein Einspritzventil vor einem Schweißschritt gemäß einem zweiten Ausführungsbeispiel der Erfindung und
- Figur 4: eine schematische Schnittansicht des in Figur 3 gezeigten Gehäuses im geschweißten Zustand.

Bevorzugte Ausführungsformen der Erfindung

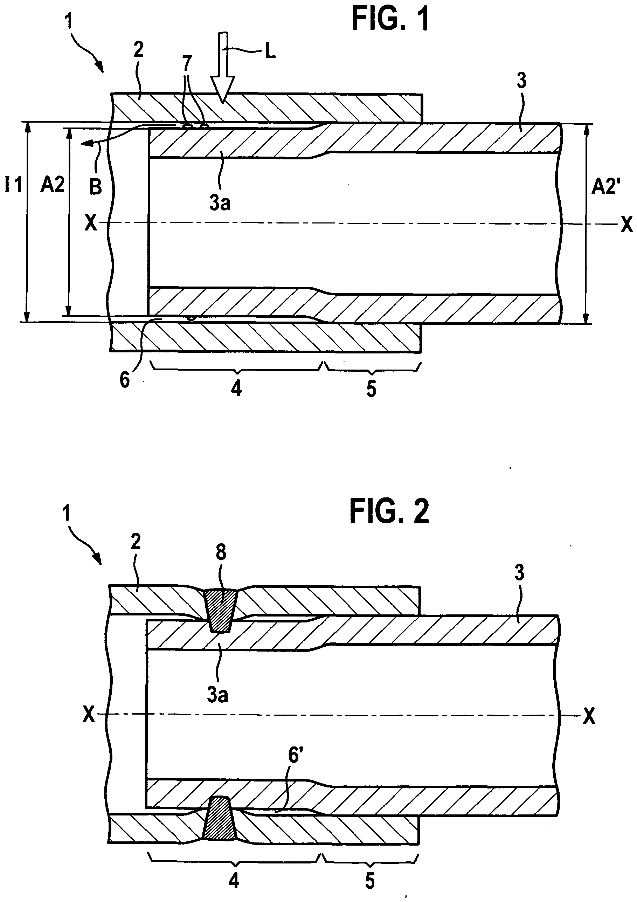

Nachfolgend wird unter Bezugnahme auf die Figuren 1 und 2 ein Verfahren und ein Gehäuse gemäß einem ersten Ausführungsbeispiel der Erfindung im Detail beschrieben.

Wie in Figur 1 gezeigt, umfasst ein Gehäuse 1 ein erstes Gehäusebauteil 2 und ein zweites Gehäusebauteil 3. Die beiden Gehäusebauteile 2, 3 sind dabei als hohlzylindrische Körper mit einem kreisförmigen Querschnitt gebildet. Das erste Gehäusebauteil 2 weist dabei einen gleichbleibenden Innendurchmesser 11 auf. Das zweite Gehäusebauteil 3 weist einen Endbereich 3a auf, weicher einen Außendurchmesser A2 aufweist. Der Endbereich 3a weist somit einen Durchmesser auf, welcher etwas kleiner ist als ein restlicher Durchmesser A2' des zweiten Gehäusebauteils 3. Durch den im Außendurchmesser reduzierten Endbereich 3a des zweiten Gehäusebauteils 3 ergibt sich somit, wie in Figur 1 gezeigt, im zusammengesteckten Zustand der beiden Gehäusebauteile 2, 3 zwischen dem ersten Gehäusebauteil 2 und dem zweiten Gehäusebauteil 3 ein umlaufender Spalt 6. Der Spalt 6 weist in Umfangsrichtung eine konstante Breite auf. Der Spalt 6 weist ferner in Axialrichtung X-X des Gehäuses eine konstante Länge auf. Die Länge des Spaltes 6 in Axialrichtung X-X entspricht dabei einem Fügebereich 4 zwischen dem ersten und zweiten Gehäusebauteil 3. Am Fügebereich 4 wird das erste Gehäusebauteil 2 mit dem zweiten Gehäusebauteil 3 mittels Laserschweißen verbunden. Ferner umfasst das Gehäuse 1 einen Pressverbindungsbereich 5, welcher unmittelbar benachbart zum Fügebereich 4 angecordnet ist. Im Pressverbindungsbereich 5 ist eine Presspassung zwischen dem ersten Gehäusebauteil 2 und dem zweite Gehäusebauteil 3 ausgebildet.

Nachfolgend wird das erfindungsgemäße Verfahren zum Fügen der Gehäusebauteile 2, 3 zum Gehäuse 1 beschrieben. In einem ersten Schritt werden die beiden Gehäusebauteile 2, 3 beispielsweise millels Tiefziehen hergestellt. Ein Innendurchmesser I1 des ersten Gehäusebauteils 2 ist dabei derart gewählt, dass er größer ist als ein Außendurchmesser A2 des zweiten Gehäusebauteils 3 an Endbereich 3a des zweiten Gehäusebauteils 3. Ferner ist ein Außendurchmesser A2' des zweiten Gehäusebauteils 3 derart gewählt, dass er zusammen mit dem Innendurchmesser I1 des ersten Gehäusebauteils 2 eine Presspassung eingehen kann. In einem nächsten Schritt wird das zweite Gehäusebauteil 3 in das erste Gehäusebauten 2 eingesteckt. Dadurch ergibt sich am Pressverhindungsbereich 5 eine Pressverbindung zwischen den beiden Gehäusebauteilen. Ferner erhebt sich am Fügebereich 4 zwischen den beiden Gehäusebauteilen 2, 3 ein konstanter, umlaufender Spalt 6 mit gleich bleibender Spaltbreite in Radialrichtung. Wenn, wie in Figur 1 gezeigt, auf den Oberflächen des ersten und zweiten Gehäusebauteils 2, 3 im Fügebereich 4 Rückstände 7 vorliegen, sind diese über den Spalt 6 mit der äußeren Umgehung in Verbindung. Die Rückstände 7 können beispielsweise aus dem vorhergehenden Herstellungsschritt resultieren, bei welchem z.B. Öl oder Benzin als Gleitmittel für das Tiefziehen verwendet wird. Der Pressverbindungsbereich 5 stellt dabei sicher, dass eine Relativpositionierung zwischen dem ersten Gehäusebauteil 2 und dem zweiten Gehäusebauteil 3 festgelegt ist. Es sei angemerkt, dass grundsätzlich auf den Pressverbindungsbereich 5 verzichtet werden kann und die beiden Gehäusebauteile 2, 3 mittels Haltevorrichtung für den nachfolgenden Schweißschritt gehalten werden könnten. Allerdings ist hierzu ein höherer technischer Aufwand für die Haltevorrichtung notwendig.

In einem nächsten Schritt erfolgt das Verschweißen der beiden Gehäusebauteile 2, 3 miteinander. In Figur 1 ist durch den Pfeil L ein Laserstrahl angedeutet, mit welchem der Schweißvorgang durchgeführt wird. Der Laserstrahl L trifft zuerst auf die Außenseite des ersten Gehäusebauteils 2. Durch die dabei entstehende Wärmeentwicklung werden die auf den Gehäuseoberflächen im Spalt 6 befindlichen Rückstände 7 in einen gasförmigen Zustand überführt. Diese nun gasförmigen Rückstände können, wie in Figur 1 durch den Pfeil B angedeutet, aus dem Spalt 6 in die Umgebung ausgasen. Wenn dann der eigentliche Schweißvorgang zwischen dem ersten und zweiten Gehäusebauteil 2, 3 beginnt, sind somit keine Rückstände 7 mehr auf den Oberflächen im Fügebereich 4 der Gehäusebauteile 2, 3. Dadurch kann eine sichere Schweißverbindung 8 zwischen dem ersten und zweiten Gehäusehauteil 2, 3 erreicht werden. Das Schweißens der Gehäusebauteile 2, 3 erfolgt entlang des gesamten Umfangs der Gehäusebauteile, wobei entweder der Laser oder die zusammengesteckten Gehäusebauteile 2, 3 rotiert werden können, Auch ist es möglich, mehrere Laser gleichzeitig zu verwenden, welche an verschiedenen Stellen am Umfang mit dem Schweißvorgang heginnen. Figur 2 zeigt den Endzustand des Gehäuses 1, in weiches die beiden Gehäusebauteile 2, 3 miteinander mittels Schweißen zusammengefüge sind. Wie in Figur 2 gezeigt, ist die Schweißverbindung 8 ungefähr in der Mitte des Fügebereichs 4 angeordnet. Dadurch ergibt sich ein zwischen den beiden Gehäusebauteilen 2, 3 eingeschlossener Bereich 6', welcher ein chemaliger Spaltbereich war. Dieser Bereich 6' hat jedoch keine Auswirkungen auf die Schweißverbindung zwischen den beiden Gehäusebauteilen 2, 3. Es sei angemerkt, dass die Bildung dieses Bereichs 6' verhindert werden kann, wenn die Schweißverbindung 8 in einem Abschnitt des Fügebereichs 4 vorgesehen wird, welche näher am Pressverbindungsbereich 5 liegt. Selbstverständlich ist es auch möglich, dass der Endbereich 3a des zweiten Gehäusebauteils 3, weicht im Fügebereich 4 liegt, eine möglichst kurze Länge in Axialrichtung X-X des Gehäuses aufweist. Die Länge dieses Endbereichs 3a ist vorzugsweise derart gewählt, dass sie der Ausdehnung der Schweißverbindung 8 in Axialrichtung X-X entspricht bzw. etwas größer ist. Das in Figur 2 gezeigte erfindungsgemäße Gehäuse 1 weist somit eine zweifache Verbindung, nämlich die Schweißverbindung 8 sowie eine Pressverbindung im Pressverbindungsbereich 5 auf.

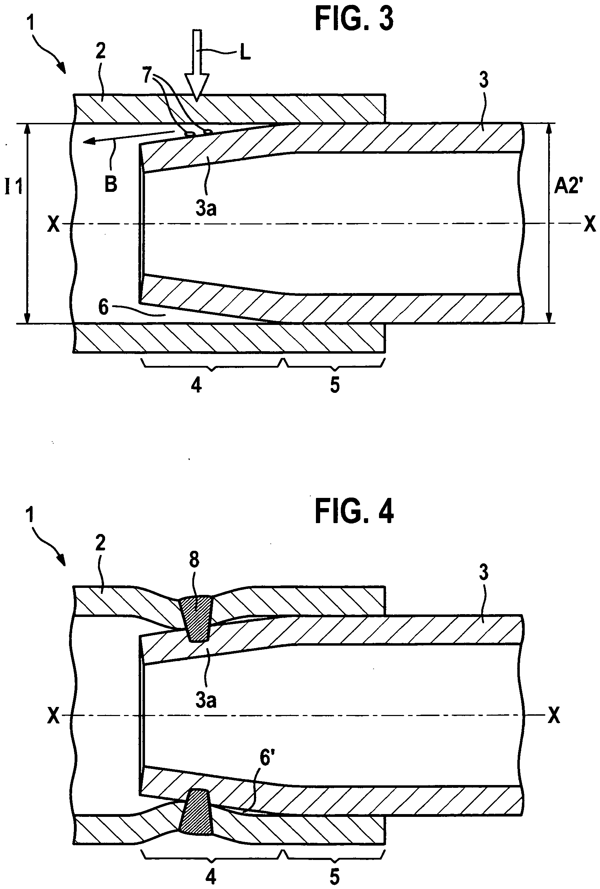

Nachfolgend wird unter Bezugnahme auf die Figuren 3 und 4 ein Verfahren bzw. ein Gehäuse gemäß einem zweiten Ausführungsbeispiel der Erfindung im Detail beschrieben. Gleiche bzw. funktional gleiche Teile sind mit den gleichen Bezugszeichen wie im ersten Ausführungsbeispiel bezeichnet.

Das zweite Ausführungsbeispiel entspricht im Wesentlichen dem ersten Ausführungsbeispiel, wobei im Unterschied dazu der Spalt 6 verschieden ausgebildet ist. Wie in Figur 3 gezeigt, ist der Spalt 6 des zweiten Ausführungsbeispiels durch einen konisch zulaufenden Endbereich 3a des zweiten Gehäusebauteils 3 gebildet. Somit weist der Spalt 6 im Schnitt eine Keilform auf. Der Spalt 6 ist wieder entlang des Umfangs des zweiten Gehäusebauteils 3 gleichbleibend ausgebildet und verjüngt sich ausgehend von dem am ersten Gehäusebauteil 2 liegenden Ende des Endbereichs 3a zum Pressverbindungsbereich 5.

Figur 4 zeigt wieder das fertige Gehäuse mit der Schweißverbindung 8 zwischen dem ersten und zweiten Gehäusebauteil 3. Die Schweißverbindung 8 ist wieder benachbart zum Pressverbindungsbereich 5 angeordnet. Wie im ersten Ausführungsbeispiel kann durch das Vorsehen des Spalts 6 ein Ausgasen und Rückständen 7, wie durch den Pfeil B angedeutet, ermöglicht werden. Da sich der Spalt 6 in Richtung des Ausgasens erweitert, kann eine besonders sichere Entfernung der gasförmigen Rückstände erfolgen.

## Patentansprüche

1. Verfahren zum Fügen eines ersten Gehäusebauteils (2) mit einem zweiten Gehäusebauteil (3) mittels Schweißen, wobei das erste Gehäusebauteil (2) und das zweite Gehäusebauteil (3) jeweils als Hohlkörper mit geschlossenem Hohlquerschnitt gebildet sind, wobei eine Form des Hohlquerschnitts des zweiten Bauteils (3) einer Form des Hohlquerschnitts des ersten Bauteils (2) entspricht, umfassend die Schritte:
- Bereitstellen des ersten Gehäusebauteils (2) mit einem ersten Innenmaß (11),
- Bereitstellen des zweiten Gehäusebauteils (3) mit einem Außenmaß (A2),
wobei das Außenmaß (A2) des zweiten Gehäusebauteils (2) kleiner ist als das Innenmaß (11) des ersten Bauteils (2),
- Anordnen des zweiten Gehäusebauteils (3) im ersten Gehäusebauteil (2) über eine Länge, so dass zwischen einer Innenwand des ersten Gehäusebauteils (2) und einer Außenwand des zweiten Gehäusebauteils (3) ein umlaufender Spalt (6) gebildet ist,
**dadurch gekennzeichnet,**
**dass** die Länge mit Spalt (6) zwischen den beiden Gehäusebauteilen (2, 3) der potinzielk Fügebereich (4) ist, wobei
das erste Gehäusebauteil (2) mit dem zweiten Gehäusebauteil (3) im Bereich des Fügebacichs mit dem Spalt (6) zwischen dem ersten und zweiten Gehäusebauteil (2, 3) verschweißt wird, indem die Schweißverbindung (8) in radialer Richtung (L) ausgehend von der Außenseite des ersten Gehäusebauteils (2) durch die Wandung des ersten Gehäusebauteils (2) sowie den Spalt (6) hindurch über die Außenseite mit dem Maß (A2) des zweiten Gehäusebauteils (3) in das zweite Gehäusebauteil (3) hinein erzeugt wird, wobei das erste Gehäusebauteil (2) im Bereich der Schweißverbindung (8) bis an die Außenseite des zweiten Gehäusebauteils (3) eingezogen wird,
wobei beim Beginn des Schweißvorgangs durch die Wärmeentwicklung des Schweißens auf den Oberflächen der zu fügenden Gehäusebauteile (2, 3) vorhandene Rückstände (7) ausgasen können und sich dann während des Schweißvorgangs aufgrund der Aufheizung und Erweichung der Gehäusebauteile (2, 3) im Fügebereich (4) der Spalt (6) schließt.

2. Verfahren nach Anspruch 1,
**dadurch gekennzeichnet,**
**dass** der umlaufende Spalt (6) entlang seiner Umfangsrichtung und entlang seiner Länge in Axialrichtung (X-X) der Gehäusebauteile (2, 3) jeweils eine gleich bleibende Dicke aufweist.

3. Verfahren nach Anspruch 2,
**dadurch gekennzeichnet,**
**dass** der Spalt (6) eine Dicke von ca. 1/100 bis ca. 50/100, insbesondere ca. 1/10 einer Wanddicke des ersten Gehäusebauteils (2) aufweist.

4. Verfahren nach Anspruch 1,
**dadurch gekennzeichnet,**
**dass** der Spalt (6) sich verjüngend, insbesondere konisch, gebildet ist.

5. Verfahren nach einem der vorhergehenden Ansprüche,
**dadurch gekennzeichnet,**
**dass** das Schweißen ein Laserschweißen ist.

6. Verfahren nach einem der vorhergehenden Ansprüche,
**dadurch gekennzeichnet,**
**dass** das erste und zweite Gehäusebauteil (2, 3) jeweils einen kreisförmigen Querschnitt aufweisen.

7. Verfahren nach einem der vorhergehenden Ansprüche,
**dadurch gekennzeichnet,**
**dass** das Schweißen gleichzeitig an mehreren Positionen am Umfang der Gehäusebauteile (2, 3) durchgeführt wird.

8. Verfahren nach einem der vorhergehenden Ansprüche,
**dadurch gekennzeichnet,**
**dass** zwischen dem ersten und zweiten Gehäusebauteil (2, 3) ein Pressverbindungsbereich (5) gebildet ist, wobei der Pressverbindungsbereich (5) benachbart zum Fügebereich (4) angeordnet ist, um eine Relativpositionierung zwischen dem ersten und zweiten Bauteil (2, 3) vor dem Schritt des Schweißens bereitzustellen.

9. Verfahren nach einem der vorhergehenden Ansprüche,
**dadurch gekennzeichnet,**
**dass** das erste und zweite Gehäusebauteil (2, 3) aus einem dünnen Blechmaterial hergestellt sind.

10. Gehäuse für ein Einspritzventil, umfassend ein erstes Gehäusebauteil (2) und ein zweites Gehäusebauteil (3), wobei das erste Gehäusebauteil (2) und das zweite Gehäusebauteil (3) jeweils als Hohlkörper mit geschlossenem Hohlquerschnitt gebildet sind, wobei eine Form des Hohlquerschnitts des zweiten Bauteils (3) einer Form des Hohlquerschnitts des ersten Bauteils (2) entspricht, und wobei das erste und zweite Gehäusebauteil (2, 3) an einem Fügebereich (4) mittels Schweißen, insbesondere Laserschweißen, miteinander gefügt sind, wobei am Fügebereich (4) ein Innenmaß (I1) des ersten Gehäusebauteils (2) derart größer ist als ein Außenmaß (A2) des zweiten Gehäusebauteils (3), dass zwischen dem ersten und zweiten Gehäusebauteil (2, 3) ein umlaufender Spalt (6) gebildet ist,
**dadurch gekennzeichnet,**
**dass** eine Schweißverbindung (8) im Fügebereich (4) vorliegt, die in radialer Richtung (L) ausgehend von der Außenseite des ersten Gehäusebauteils (2) durch die Wandung des ersten Gehäusebauteils (2) sowie den Spalt (6) hindurch über die Außenseite mit dem Maß (A2) des zweiten Gehäusebauteils (3) in das zweite Gehäusebauteil (3) hinein verläuft, wobei das erste Gehäusebauteil (2) im Bereich der Schweißverbindung (8) bis an der Außenseite des zweiten Gehäusebauteils (3) anliegend eingezogen ist.

11. Gehäuse nach Anspruch 10,
**dadurch gekennzeichnet,**
**dass** der Spalt (6) vor dem Schweißen eine gleich bleibende Dicke aufweist oder der Spalt (6) eine sich verjüngende Form aufweist.

12. Gehäuse nach einem der Ansprüche 10 oder 11,
**dadurch gekennzeichnet,**
**dass** das erste und zweite Gehäusebauteil (2, 3) jeweils einen kreisförmigen oder ovalen Querschnitt aufweisen.

13. Gehäuse nach einem der Ansprüche 10 bis 12,
ferner umfassend einen Pressverbindungsbereich (5) zwischen dem ersten und zweiten Gehäusebauteil (2, 3), wobei der Pressverbindungsbereich (5) benachbart zum Fügebereich (4) angeordnet ist.

## Claims

1. Method for joining a first housing component (2) to a second housing component (3) by means of welding, wherein the first housing component (2) and the second housing component (3) are each formed as a hollow body with a closed hollow cross section, wherein the form of the hollow cross section of the second component (3) corresponds to the form of the hollow cross section of the first component (2), said method comprising the following steps:
- the first housing component (2) is provided with a first inner dimension (I1),
- the second housing component (3) is provided with an outer dimension (A2), wherein the outer dimension (A2) of the second housing component (2) is smaller than the inner dimension (I1) of the first component (2),
- the second housing component (3) is arranged in the first housing component (2) over a length such that a peripheral gap (6) is formed between an inner wall of the first housing component (2) and an outer wall of the second housing component (3),
**characterized**
**in that** the length with the gap (6) between the two housing components (2, 3) is the potential joining region (4), wherein
the first housing component (2) is welded to the second housing component (3) in the region of the joining region with the gap (6) between the first and second housing components (2, 3), in that the welded connection (8) is produced in the radial direction (L) proceeding from the outer side of the first housing component (2) through the wall of the first housing component (2) and also the gap (6) via the outer side with the dimension (A2) of the second housing component (3) into the second housing component (3), wherein the first housing component (2) is drawn onto the outer side of the second housing component (3) in the region of the welded connection (8),
wherein, at the start of the welding process, residues (7) present on the surfaces of the housing components (2, 3) to be joined can degas by virtue of the evolution of heat during the welding, and then the gap (6) closes during the welding process on account of the heating and softening of the housing components (2, 3) in the joining region (4).

2. Method according to Claim 1,
**characterized**
**in that** the peripheral gap (6) has a constant thickness in each case along the circumferential direction thereof and along the length thereof in the axial direction (X-X) of the housing components (2, 3).

3. Method according to Claim 2,
**characterized**
**in that** the gap (6) has a thickness measuring about 1/100 to about 50/100, in particular about 1/10 the wall thickness of the first housing component (2).

4. Method according to Claim 1,
**characterized**
**in that** the gap (6) has a tapered, in particular conical, form.

5. Method according to one of the preceding claims,
**characterized**
**in that** the welding process is a laser welding process.

6. Method according to one of the preceding claims,
**characterized**
**in that** the first and second housing components (2, 3) each have a circular cross section.

7. Method according to one of the preceding claims,
**characterized**
**in that** the welding process is carried out simultaneously at a plurality of positions on the circumference of the housing components (2, 3).

8. Method according to one of the preceding claims,
**characterized**
**in that** a press-fit region (5) is formed between the first and second housing components (2, 3), wherein the press-fit region (5) is arranged adjacent to the joining region (4) in order to provide for relative positioning between the first and second components (2, 3) before the welding step.

9. Method according to one of the preceding claims,
**characterized**
**in that** the first and second housing components (2, 3) are produced from a thin sheet metal material.

10. Housing for an injection valve, comprising a first housing component (2) and a second housing component (3), wherein the first housing component (2) and the second housing component (3) are each formed as a hollow body with a closed hollow cross section, wherein the form of the hollow cross section of the second component (3) corresponds to the form of the hollow cross section of the first component (2), and wherein the first and second housing components (2, 3) are joined to one another by means of welding, in particular laser welding, at a joining region (4), wherein an inner dimension (I1) of the first housing component (2) is greater than an outer dimension (A2) of the second housing component (3) at the joining region (4) in such a manner that a peripheral gap (6) is formed between the first and second housing components (2, 3),
**characterized**
**in that** a welded connection (8) is present in the joining region (4), running in the radial direction (L) proceeding from the outer side of the first housing component (2) through the wall of the first housing component (2) and also the gap (6) via the outer side with the dimension (A2) of the second housing component (3) into the second housing component (3), wherein the first housing component (2) is drawn in so as to bear against the outer side of the second housing component (3) in the region of the welded connection (8).

11. Housing according to Claim 10,
**characterized**
**in that**, before the welding process, the gap (6) has a constant thickness or the gap (6) has a tapered form.

12. Housing according to either of Claims 10 and 11,
**characterized**
**in that** the first and second housing components (2, 3) each have a circular or oval cross section.

13. Housing according to one of Claims 10 to 12, furthermore comprising a press-fit region (5) between the first and second housing components (2, 3), wherein the press-fit region (5) is arranged adjacent to the joining region (4).

## Revendications

1. Procédé de jonction par soudage d'un premier composant de boîtier (2) et d'un deuxième composant de boîtier (3), le premier composant de boîtier (2) et le deuxième composant de boîtier (3) étant tous deux configurés comme corps creux à section transversale creuse fermée, une forme de la section transversale creuse du deuxième composant (3) correspondant à la forme de la section transversale creuse du premier composant (2), le procédé comportant les étapes qui consistent à :
- préparer le premier composant de boîtier (2) à une première dimension intérieure (I1),
- préparer le deuxième composant de boîtier (3) à une dimension extérieure (A2), la dimension extérieure (A2) du deuxième composant de boîtier (2) étant plus petite que la dimension intérieure (I1) du premier composant (2),
- placer le deuxième composant de boîtier (3) dans le premier composant de boîtier (2) de manière à former sur une longueur un interstice périphérique (6) entre une paroi intérieure du premier composant de boîtier (2) et une paroi extérieure du deuxième composant de boîtier (3),
**caractérisé en ce que**
la longueur qui présente un interstice (6) entre les deux composants de boîtier (2, 3) est une zone potentielle de jonction (4),
**en ce que** le premier composant de boîtier (2) est soudé au deuxième composant de boîtier (3) au niveau de la zone de jonction dotée de l'interstice (6) entre le premier et le deuxième composant de boîtier (2, 3) en formant la liaison soudée (8) dans la direction radiale (L) partant du côté extérieur du premier composant de boîtier (2), à travers la paroi du premier composant de boîtier (2) ainsi qu'à travers l'interstice (6) et le côté extérieur de dimension (A2) du deuxième composant de boîtier (3) jusque dans le deuxième composant de boîtier (3), le premier composant de boîtier (2) étant enfoncé au niveau de la liaison soudée (8) jusqu'au côté extérieur du deuxième composant de boîtier (3),
**en ce qu'**au début de l'opération de soudage, les résidus (7) présents à la surface des composants de boîtier (2, 3) à rejoindre peuvent se dégazer sous l'action de la chaleur dégagée par le soudage et
**en ce que** l'interstice (6) se ferme ensuite dans la zone de jonction (4) suite au chauffage et à l'amollissement des composants de boîtier (2, 3) pendant l'opération de soudage.

2. Procédé selon la revendication 1, **caractérisé en ce que** l'interstice périphérique (6) présente une épaisseur constante dans sa direction périphérique et suivant sa longueur dans la direction axiale (X-X) des composants de boîtier (2, 3).

3. Procédé selon la revendication 2, **caractérisé en ce que** l'interstice (6) présente une épaisseur d'environ 1/100 à environ 50/100 et en particulier d'environ 1/10 de l'épaisseur de la paroi du premier composant de boîtier (2).

4. Procédé selon la revendication 1, **caractérisé en ce que** l'interstice (6) se rétrécit, en particulier coniquement.

5. Procédé selon l'une des revendications précédentes, **caractérisé en ce que** le soudage est un soudage au laser.

6. Procédé selon l'une des revendications précédentes, **caractérisé en ce que** le premier et le deuxième composant de boîtier (2, 3) présentent tous deux une section transversale circulaire.

7. Procédé selon l'une des revendications précédentes, **caractérisé en ce que** le soudage est réalisé simultanément en plusieurs positions de la périphérie des composants de boîtier (2, 3).

8. Procédé selon l'une des revendications précédentes, **caractérisé en ce qu'**une zone (5) de liaison par serrage est formée entre le premier et le deuxième composant de boîtier (2, 3), la zone (5) de liaison par serrage étant disposée au voisinage de la zone de jonction (4) pour fixer la position relative du premier et du deuxième composant (2, 3) avant l'étape de soudage.

9. Procédé selon l'une des revendications précédentes, **caractérisé en ce que** le premier et le deuxième composant de boîtier (2, 3) sont réalisés en un matériau en tôle mince.

10. Boîtier de soupape d'injection comprenant un premier composant partie de boîtier (2) et un deuxième composant de boîtier (3),
le premier composant de boîtier (2) et le deuxième composant de boîtier (3) étant tous deux configurés comme corps creux à section transversale creuse fermée, une forme de la section transversale creuse du deuxième composant (3) correspondant à la forme de la section transversale creuse du premier composant (2),
le premier et le deuxième composant de boîtier (2, 3) étant rejoints l'un à l'autre par soudage dans une zone de jonction (4), en particulier par soudage au laser, une dimension intérieure (I1) du premier composant de boîtier (2) étant supérieure à une dimension extérieure (A2) du deuxième composant de boîtier (3) dans la zone de jonction (4) de manière à former un interstice périphérique (6) entre le premier et le deuxième composant de boîtier (2, 3),
**caractérisé en ce que**
une liaison soudée (8) est formée dans la zone de jonction (4) et s'étend dans la direction radiale (L) jusque dans le deuxième composant de boîtier (3) en partant du côté extérieur du premier composant de boîtier (2), à travers la paroi du premier composant de boîtier (2) et l'interstice (6) jusqu'au côté extérieur de dimension (A2) du deuxième composant de boîtier (3), le premier composant de boîtier (2) étant enfoncé au niveau de la liaison soudée (8) de manière à reposer contre le côté extérieur du deuxième composant de boîtier (3).

11. Boîtier selon la revendication 10, **caractérisé en ce qu'**avant le soudage, l'épaisseur de l'interstice (6) est constante ou la forme de l'interstice (6) se rétrécit.

12. Boîtier selon l'une des revendications 10 ou 11, **caractérisé en ce que** le premier et le deuxième composant de boîtier (2, 3) présentent tous deux une section transversale circulaire ou ovale.

13. Boîtier selon l'une des revendications 10 à 12, comportant en outre une zone (5) de liaison par serrage entre le premier et le deuxième composant de boîtier (2, 3), la zone (5) de liaison par serrage étant disposée au voisinage de la zone de jonction (4).
